(19) Europäisches Patentamt
European Patent Office
Office européen des brevets

(11) **EP 2 321 224 B1**

(12) **FASCICULE DE BREVET EUROPEEN**

(45) Date de publication et mention de la délivrance du brevet:
**06.09.2017 Bulletin 2017/36**

(21) Numéro de dépôt: **09784318.9**

(22) Date de dépôt: **29.07.2009**

(51) Int Cl.:
*C01F 7/14* (2006.01)   *C01F 7/06* (2006.01)

(86) Numéro de dépôt international:
**PCT/FR2009/000948**

(87) Numéro de publication internationale:
**WO 2010/015738 (11.02.2010 Gazette 2010/06)**

(54) **PERFECTIONNEMENT AU PROCEDE BAYER DE PRODUCTION DE TRIHYDRATE D'ALUMINE, LEDIT PROCEDE COMPRENANT UNE ETAPE DANS LAQUELLE LA LIQUEUR SURSATUREE EST FILTREE A HAUTE TEMPERATURE AVANT DECOMPOSITION**

VERBESSERUNG DES BAYER-VERFAHRENS ZUR HERSTELLUNG VON ALUMINIUMTRIHYDRAT MIT EINEM SCHRITT, BEI DEM MAN DIE ÜBERSÄTTIGTE LAUGE BEI HOHER TEMPERATUR VOR DER ZERSETZUNG FILTRIERT

IMPROVEMENT TO THE BAYER PROCESS FOR PRODUCING ALUMINA TRIHYDRATE, SAID PROCESS COMPRISING A STEP IN WHICH THE SUPERSATURATED LIQUOR IS FILTERED AT HIGH TEMPERATURE BEFORE DECOMPOSITION

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **06.08.2008 FR 0804488**

(43) Date de publication de la demande:
**18.05.2011 Bulletin 2011/20**

(73) Titulaire: **Rio Tinto Alcan International Limited Montréal, QC H3B 0E3 (CA)**

(72) Inventeurs:
• **FORTIN, Luc**
  **Chicoutimi**
  **Quebec G7H 7B7 (CA)**
• **FORTE, Guy**
  **Jonquière Quebec G7S 5V4 (CA)**
• **THOMAS, Henri**
  **F-13090 Aix en Provence (FR)**
• **BASSAM, El Kadi**
  **F-13090 Aix en Provence (FR)**

(74) Mandataire: **Mérigeault, Thierry Louis Henri et al Rio Tinto France SAS Industrial Property Department 725, rue Aristide Bergès BP25 Voreppe 38341 Moirans Cedex (FR)**

(56) Documents cités:
**WO-A-2007/115365      FR-A- 2 728 556
FR-A- 2 860 782        US-A- 4 676 959
US-A- 5 407 561**

EP 2 321 224 B1

**Description**

L'invention concerne un procédé de fabrication de trihydrate d'alumine par attaque alcaline de bauxite selon le procédé Bayer, comportant le broyage puis l'attaque de ladite bauxite broyée par mise en contact avec une liqueur d'aluminate de sodium, l'attaque conduisant à la formation d'une suspension que l'on traite pour séparer les résidus insolubles de la liqueur d'aluminate de sodium, la liqueur d'aluminate ainsi obtenue étant ensuite décomposée puis recyclée comme liqueur d'attaque après avoir été séparée du trihydrate d'alumine précipité au cours de la décomposition. L'invention concerne plus particulièrement un procédé permettant d'augmenter la productivité de la liqueur lors de sa décomposition.

Le procédé Bayer largement décrit dans la littérature spécialisée constitue la technique essentielle de production d'alumine destinée à être transformée en alummium par électrolyse ignée. Selon ce procédé, le minerai de bauxite est attaqué à chaud au moyen d'une liqueur d'aluminate de sodium à concentration appropriée (liqueur d'attaque), provoquant ainsi la solubilisation de l'alumine dans ladite liqueur d'aluminate et l'obtention d'une suspension constituée de particules du minerai qui n'ont pas été dissoutes au cours de l'attaque (résidu inattaqué ou "boues rouges") dans ladite liqueur d'aluminate de sodium.

En général, la suspension est diluée et les boues sont séparées de la liqueur d'aluminate par décantation. Une fois séparée de ces boues, la liqueur est refroidie jusqu'à une température où elle se trouve dans un état en fort déséquilibre de sursaturation. On la nomme à ce stade "liqueur sursaturée". Des particules de trihydrate d'alumine sont alors ensemencées dans le but de provoquer la "décomposition" de la liqueur sursaturée, c'est-à-dire la précipitation de l'alumine sous forme de trihydrate d'alumine. Enfin, la liqueur d'aluminate de sodium, appauvrie en alumine du fait de la précipitation, appelée "liqueur décomposée", est recyclée vers l'étape de l'attaque de la bauxite après avoir été concentrée par évaporation et apport éventuel en hydroxyde de sodium.

Il est bien connu que les conditions de traitement doivent être adaptées au degré d'hydratation et à la structure cristallographique de l'alumine contenue dans la bauxite ainsi qu'à la nature et à la teneur des impuretés qu'elle contient. Les bauxites contenant de l'alumine à l'état de monohydrate (boehmite, diaspore) sont plus difficiles à attaquer que la bauxite contenant de l'alumine à l'état de trihydrate et sont traitées selon le procédé Bayer à des températures supérieures à 200°C, généralement comprises entre 220 et 300°C. Les bauxites contenant de l'alumine à l'état de trihydrate (gibbsite, hydrargillite) sont traitées à des températures inférieures à 200°C et généralement comprises entre 100 et 170°C. Ainsi, que les bauxites soient à monohydrates ou à trihydrates, elles sont attaquées sous des pressions en général supérieures à la pression atmosphérique, la suspension résultant du mélange du minerai broyé et de la liqueur d'aluminate passant par exemple par une succession d'autoclaves ou d'échangeurs de chaleur tubulaires. La pression, souvent évoquée dans le texte qui suit, est exprimée avec des unités pratiques courantes, à savoir l'atmosphère ou le bar, qui correspondent chacune à 100 000 pascals, ou encore 100 000 newtons par mètre carré. Elle est de plus exprimée en valeur absolue: une pression de 2 bars correspond par exemple à une surpression d'un bar environ par rapport à la pression atmosphérique, elle-même voisine de 1 bar.

Les principaux facteurs qui agissent sur le rendement d'attaque de la bauxite sont la température et la concentration en hydroxyde de sodium ou soude caustique "libre", c'est-à-dire susceptible de dissoudre de l'alumine. Il est courant d'exprimer la soude caustique par le groupement de base Na2O et de donner la concentration en soude caustique en grammes Na2O par litre (g Na2O/l). On caractérise d'autre part l'état de saturation ou de stabilité des liqueurs par le rapport pondéral:

$$R_p = \frac{concentration\ en\ Al_2O_3\ dissoute\ (en\ g\,/\,l)}{concentration\ en\ Na_2O\ caustique\ (en\ g\,/\,l)}$$

Ce rapport pondéral Rp, caractéristique de l'état de saturation en alumine dissoute dans la liqueur du cycle Bayer, permet de déterminer la productivité de la liqueur lors de sa décomposition. Celle-ci est définie par la quantité d'alumine restituée, sous forme de trihydrate d'alumine, après décomposition de la liqueur sursaturée, rapportée à un volume donné de liqueur sursaturée. La productivité, exprimée en kilogrammes d'alumine par mètre cube de liqueur d'aluminate (kg $Al_2O_3/m^3$), est obtenue en multipliant la variation du Rp avant et après décomposition par la concentration en soude caustique de la liqueur sursaturée.

Que les bauxites soient à monohydrates ou à trihydrates, la productivité de la décomposition est d'autant meilleure que le rapport Rp atteint après attaque est élevé. Cependant, la dilution et le refroidissement effectués sur la suspension pour faciliter la séparation liquide/solide, le temps de séjour de la liqueur dans les dispositifs permettant de la séparer des résidus insolubles (en général des décanteurs), créent des conditions telles que le risque de rétrogradation est d'autant plus fort que le Rp est élevé. La rétrogradation est un phénomène à éviter car elle se traduit par la précipitation prématurée du trihydrate d'alumine, qui, au lieu d'être recueilli dans la chaîne de décomposition, se mélange aux résidus insolubles et est mis en décharge avec eux. Le risque de rétrogradation incite donc à limiter la valeur du Rp de sorte que la rapidité avec laquelle peut s'effectuer la séparation entre les résidus insolubles et la liqueur d'aluminate sursaturée influe fortement sur le rendement et la productivité du procédé.

Dans les débuts de l'industrie de l'alumine, la séparation des résidus insolubles était effectuée par filtration, sur filtre-presse. Cette technique n'est guère plus utilisée que dans des cas exceptionnels, au profit de la sédimentation, réalisée en décanteurs à marche continue. La séparation par décantation des résidus insolubles permet en effet de traiter en continu des flux importants avec des coûts de fonctionnement faibles. En général, la décantation se fait après dilution et refroidissement de la suspension qui est portée à la pression atmosphérique. Toutefois, la demanderesse a conçu un dispositif, décrit dans le brevet US 5 407 561, qui permet de décanter une suspension injectée sous pression, à une température plus élevée. Avec un tel dispositif, le temps de décantation est plus faible, ce qui permet de diminuer le risque de rétrogradation ou, à risque égal, d'augmenter le Rp visé après attaque et ainsi d'augmenter la productivité de la liqueur lors de la décomposition.

Après la décantation et avant son arrivée dans la chaîne de décomposition, la liqueur sursaturée, qui contient encore typiquement 100 à 300 mg/l de matière sèche, subit en général une filtration, appelée filtration de sécurité. On utilise pour cela en général des filtres de type Kelly. Ces filtres, décrits dans le brevet GB 179 355, sont des filtres destinés à équiper des cuves à l'intérieur desquelles des aménagements mobiles de cadres métalliques supportent des surfaces filtrantes. Le principe de base de la filtration consiste à provoquer le passage du liquide à travers un média filtrant dont les orifices permettent le passage du liquide mais empêchent celui des particules. Tel que décrit dans le brevet d'origine, le passage de la suspension au travers du média de filtration se faisait par simple gravité. Mais la résistance à l'écoulement de liquide due non seulement au média filtrant, mais également à la couche de particules accumulées contre ce dernier, couche communément appelée "gâteau", oblige à mettre la suspension sous pression, par exemple au moyen de pompes qui consomment une énergie d'autant plus importante que la pression nécessaire est élevée. Bien entendu, il faut procéder de manière cyclique à l'élimination de ce gâteau lorsqu'il atteint une certaine épaisseur, pour que sa résistance ait une valeur moyenne acceptable.

Avec les premiers modèles de filtres Kelly, l'élimination du gâteau était effectuée en ouvrant les cuves et en démontant régulièrement les cadres. Des améliorations ont été apportées, par exemple en positionnant les cadres verticalement et en employant un moyen permettant de décoller le gâteau qui tombe alors sous son propre poids au fond de la cuve du filtre, d'où il est évacué. Ce moyen peut être un moyen mécanique, par exemple un moyen imprimant des secousses aux surfaces filtrantes, ou encore un ou plusieurs jets de liquide qui impactent en plusieurs endroits le gâteau ou balayent la surface de ce dernier. Mais, de préférence, on réalise un contre-courant de liquide en renvoyant à contresens, sous pression ou par simple gravité, une partie du liquide déjà filtré, dit "filtrat", à travers le média filtrant. Des dispositifs tels que ceux décrits dans le brevet européen EP 0 226 478 sont à l'heure fréquemment utilisés pour réaliser la filtration de sécurité.

Le gâteau de filtration contient en général non seulement des particules de résidu insoluble provenant de la bauxite mais également des produits insolubles tels que des aluminates tricalciques ou des hydrogrenats qui résultent de la réaction de la liqueur d'aluminate avec la chaux ou l'aluminate tricalcique hexahydraté, ce dernier étant utilisé en général comme adjuvant de filtration et injecté en amont du filtre de sécurité. Le gâteau est soit évacué, soit réutilisé dans la chaîne Bayer, comme indiqué dans le brevet français FR 2 860 78, pour réduire l'encrassement dans les échangeurs de chaleur.

Malgré tous les perfectionnements déjà apportés au procédé Bayer, le souci constant de la demanderesse est de mettre au point un procédé Bayer de fabrication de trihydrate d'alumine par attaque alcaline de bauxite qui soit de plus en plus performant, en particulier qui présente une productivité à la décomposition aussi forte que possible avec un risque de rétrogradation aussi faible que possible.

Un premier objet selon l'invention est un procédé Bayer de fabrication de trihydrate d'alumine par attaque alcaline de bauxite, dans lequel le minerai de bauxite est attaqué à chaud au moyen d'une liqueur d'aluminate de sodium à concentration appropriée (liqueur d'attaque), provoquant ainsi la solubilisation de l'alumine dans ladite liqueur d'aluminate de sodium et l'obtention d'une suspension comprenant ladite liqueur enrichie en alumine dissoute et des particules du minerai qui n'ont pas été dissoutes au cours de l'attaque (résidu inattaqué ou "boues rouges"), les boues rouges étant ensuite séparées de ladite liqueur d'aluminate de sodium, typiquement par décantation, ladite liqueur d'aluminate étant mise dans un état en fort déséquilibre de sursaturation (liqueur sursaturée), typiquement par refroidissement et dilution, procédé dans lequel, après une étape de filtration, appelée filtration de sécurité, comprenant ou non un ajout d'adjuvant(s) de filtration, au cours de laquelle la concentration en particules insolubles de la liqueur d'aluminate est portée à une valeur inférieure à 10 mg/l, des particules de trihydrate d'alumine sont introduites dans ladite liqueur sursaturée dans le but de provoquer la décomposition, c'est-à-dire la précipitation de l'alumine sous forme de trihydrate d'alumine, et dans lequel, après décomposition, la liqueur d'aluminate de sodium, appauvrie en alumine du fait de la précipitation ("liqueur décomposée") est recyclée vers l'étape de l'attaque de la bauxite après avoir été concentrée, typiquement par évaporation et apport éventuel en hydroxyde de sodium, ledit procédé étant caractérisé en ce que, au cours de ladite étape de filtration de sécurité, on utilise un dispositif de filtration comprenant une zone dans laquelle la liqueur est soumise, après passage par ledit média de filtration à une pression supérieure à 2 bars, de préférence supérieure à 3 bars. De préférence, pour aider la liqueur à franchir le media de filtration, une pression supérieure est appliquée en amont dudit media de filtration. Dans cette variante préférée, ledit dispositif de filtration comprend également une zone dans laquelle la liqueur est soumise, avant passage par le média de filtration, à une pression supérieure à 5 bars, de préférence supérieure à 6, typiquement voisine de 7 bars.

En maintenant la liqueur sous pression en aval de la filtration de sécurité comme il est indiqué dans le procédé selon l'invention, il devient possible de porter la température de ladite liqueur à une température supérieure à la température habituellement utilisée dans l'art antérieur, qui était proche de 100°C. On peut atteindre ici, suivant la pression imposée, une température supérieure à 120°C, de préférence supérieure à 130°C, de préférence encore supérieure à 140°C. Avec une telle température et une telle pression, le Rp d'équilibre associé à la liqueur d'aluminate est plus élevé que dans l'art antérieur, de sorte que le taux de saturation de ladite liqueur s'en rapproche, ce qui, pour un même temps de séjour dans le dispositif de la filtration de sécurité, expose celle-ci à un risque de rétrogradation nettement plus faible.

En maintenant le risque de rétrogradation à un niveau comparable à celui qui était jusqu'à présent accepté, il est possible de viser un taux de sursaturation plus élevé que dans l'art antérieur. De préférence, on emploie un adjuvant de filtration approprié qui, en favorisant un temps de séjour plus court de la liqueur dans le dispositif de filtration, permet de viser un taux de saturation encore plus élevé. Avantageusement, l'adjuvant de filtration employé à la filtration de sécurité est choisi parmi des matériaux tels que la chaux, les aluminates tricalciques ou encore la wallastonite. Le groupe des aluminates tricalciques regroupe:

- certains hydrogrenats, qui sont des silicates hydroxylés de formule générale $X_3 Y_2 (SiO4)_{3-x} (OH)_{4x}$, dans laquelle X=Ca et Y=Al; dans le procédé Bayer, il est d'usage de représenter ces hydrogrenats par la formule générale suivante:

$$3 \, XO, Y_2O_3, (6-2k) \, H_2O, k \, SiO_2$$

où X=Ca, Y=Al et où k est compris entre 0 et 3; l'hydrogrenat correspondant à k=0 étant l'aluminate tricalcique hexahydraté.
- des hydrogrenats substitués issus de la famille précédente, par exemple par substitution partielle du calcium (jusqu'à 10% atomique) ou de l'aluminium (jusqu'à 20 % atomique) par un autre métal: le calcium peut être remplacé par le fer (ion ferreux), le manganèse ou le magnésium, l'aluminium peut être remplacé par le chrome ou le fer (ion ferrique).

La demanderesse a constaté qu'il était possible de porter le taux de sursaturation Rp de la liqueur d'aluminate à une valeur supérieure à 1,25 sans que le risque de précipitation intempestive dans le dispositif de filtration devienne rédhibitoire. Lorsque la température peut être maintenue à une valeur supérieure à 140°C, typiquement 140°C-145°C, on peut porter l'indice de saturation Rp à une valeur voisine de 1,35 , voire plus. Ainsi, on peut obtenir grâce au procédé selon l'invention, à concentration caustique constante, une productivité à la décomposition notablement améliorée, de l'ordre de 10 à 30%. A titre indicatif, la concentration caustique d'une liqueur d'aluminate de sodium destinée à attaquer une bauxite riche en alumine présente sous forme de trihydrate est typiquement voisine de 120 g - 170 g $Na_2O$ / litre.

D'autre part, un autre avantage découle du maintien de la liqueur sous pression en aval de la filtration de sécurité: il est possible, nous l'avons vu, de filtrer une liqueur à une température supérieure à 120°C, de préférence supérieure à 130°C, de préférence encore supérieure à 140°C, ce qui permet de disposer d'une liqueur beaucoup moins visqueuse que dans l'art antérieur. Cette moindre viscosité a pour conséquence une hausse significative du taux de filtration et une diminution de la résistance à l'écoulement par unité de surface du media de filtration. On a donc la possibilité, à performance équivalente, de diminuer la surface filtrante, voire le nombre de dispositifs de filtration au niveau de la filtration de sécurité.

Dans la pratique, la température de dissolution optimale de l'hydratgillite étant voisine de 155°C, il n'est pas très intéressant de monter la température à une valeur nettement supérieure à 160°C, car ceci nécessiterait l'application d'une pression avant filtration supérieure à 9 bars environ. De la sorte, pour des circuits Bayer destinés à traiter des bauxites contenant essentiellement de l'alumine sous forme de trihydrate, on utilise selon l'invention un dispositif comprenant une zone dans laquelle la liqueur est soumise, avant passage par le média de filtration, à une pression comprise entre 5 et 9 bars, de préférence entre 6 et 8 bars, typiquement voisine de 7 bars et une zone dans laquelle la liqueur est soumise, après passage par ledit média de filtration à une pression comprise entre 2 bars et 6 bars, de préférence comprise entre 3 et 5 bars.

Cependant, pour des bauxites riches en alumine présente sous forme de monohydrate (boehmite, diaspore), les limites supérieures de pression et de température indiquées ci-dessus peuvent être dépassées.

Mais une autre limitation pratique de la température est imposée par la tenue du matériau du média de filtration pour lequel les conditions d'emploi sont particulièrement contraignantes: le matériau doit non seulement avoir de bonnes caractéristiques mécaniques à la température d'emploi mais il doit également résister au milieu alcalin agressif. De plus, les très fines particules solides bouchent rapidement les pores du média de filtration et empêchent de nettoyer celui-ci efficacement. La demanderesse a constaté qu'il était préférable de remplacer le média de filtration classiquement utilisé dans la filtration de sécurité de l'art antérieur, typiquement une toile en polypropylène non tissé perforé, par un média choisi parmi les polyamides (PA), en particulier les polyamides aromatiques (aramides), le polyfluorure de vinylidène (PVDF), le polytétrafluoroéthylène (PTFE) et, de préférence, le polysulfure de phénylène (PPS). Avantageusement, ce média se présente sous la forme d'une toile en un de ces matériaux, non tissé et perforé, bien adapté pour baigner dans un milieu alcalin à forte concentration caustique porté à haute température.

Pour maintenir la liqueur d'aluminate de sodium à de telles pressions lors de la filtration de sécurité, on emploie avantageusement au moins un dispositif comprenant une cuve, un média de filtration et au moins deux zones séparées par ledit média de filtration, la liqueur étant introduite, avant filtration, dans la première zone et passant, après filtration, dans la deuxième zone. Ledit dispositif comprend également des moyens prévus pour détacher, dans la première zone, le gâteau de filtration du média de filtration alors que la liqueur d'aluminate de sodium reste à une pression supérieure à 2 bars.

Dans la pratique antérieure, la filtration de sécurité comprenait en général plusieurs filtres fonctionnant en parallèle, de sorte que l'un d'entre eux pouvait facilement être mis hors du circuit pour l'enlèvement du gâteau de filtration et le nettoyage du média de filtration ("débâtissage"). Le débâtissage se faisait à la pression atmosphérique. Ici, dans le cadre de l'invention, il ne suffit pas d'isoler le dispositif de filtration du circuit Bayer pendant le débâtissage car ce dernier doit se faire sous une pression au moins supérieure à 2 bars, de préférence au moins supérieure à 3 bars, de façon à éviter une précipitation intempestive de trihydrate d'alumine sur le média de filtration. En effet, une telle précipitation rendrait rapidement impropres à toute utilisation ultérieure les pièces du dispositif de filtration qui sont en contact avec ladite liqueur, à savoir les cadres de filtre, les tuyauteries d'alimentation et de sortie de la liqueur, les pièces internes et, bien évidemment, le media de filtration lui-même.

Plusieurs moyens peuvent être prévus pour détacher le gâteau de filtration du média de filtration, mais tous doivent permettre de réaliser le détachement dans un dispositif de filtration maintenu sous pression. On peut ainsi envisager:

a) un racleur se déplaçant, par translation ou par rotation, parallèlement à la surface du média de filtration, pouvant fonctionner de façon discontinue, en fonction de l'épaisseur atteinte par le gâteau et de la résistance à l'écoulement qui en résulte, ou pouvant fonctionner de façon continue, en association avec un système d'aspiration continue, par exemple placé à l'intérieur même du dispositif de filtration, comme suggéré dans EP 0 382 202;

b) un système comprenant plusieurs vannes disposées sur les tubulures d'entrée et d'évacuation de la liqueur qui permettent l'isolement du dispositif de filtration par rapport au circuit Bayer et par rapport à l'extérieur soumis à la pression atmosphérique, la liqueur d'aluminate piégée dans le circuit isolé étant alors mise en circulation de façon à effectuer un nettoyage du média de filtration. On peut utiliser pour cela,

b1) soit une pompe secondaire que l'on met en marche après avoir isolé le dispositif de filtration pour entraîner la liqueur de telle sorte qu'elle passe à contre-courant à travers ledit média de filtration, ou encore pour la projeter sous forme de jets violents sur la surface du gâteau;

b2) soit un dispositif de stockage de la liqueur filtrée placé au-dessus du dispositif de filtration: lorsque ce dernier est isolé et que la pompe d'alimentation n'agit plus, la liqueur stockée dans ce dispositif de stockage redescend par gravité vers le media de filtration pour le traverser à contre-courant, détacher et entraîner les débris du gâteau de filtration. Une installation similaire à celle décrite dans EP 0 226 478 peut être utilisée pour mettre en oeuvre cette modalité, à la différence près que le bac d'évacuation des débris du gâteau ne doit pas être à la pression atmosphérique.

Les moyens prévus pour évacuer les fragments de gâteau détachés du média de filtration peuvent être de plusieurs natures. Toutefois, que le détachement ait été effectué de façon continue ou discontinue, les fragments de gâteau détachés du média de filtration, qui se présentent sous la forme d'une boue plus ou moins homogène, sont, avant d'être évacués et portés à la pression atmosphérique, extraits du dispositif de filtration par entraînement dans une tubulure d'évacuation dont la première extrémité est connectée à ladite première zone et dont l'autre extrémité est connectée à un dispositif d'évacuation des boues. Avantageusement, ladite tubulure d'évacuation est munie d'une vanne qui permet d'isoler le dispositif de filtration du dispositif d'évacuation des boues issues du gâteau de filtration.

Le dispositif d'évacuation des boues issues du gâteau de filtration peut se présenter sous plusieurs formes, en fonction des dispositifs existant sur le circuit Bayer considéré. Par exemple, si, en amont de la filtration de sécurité, on a mis en place un décanteur sous pression du type de celui décrit dans US 5 407 561, il apparaît avantageux de relier la tubulure d'évacuation des fragments de gâteau de filtration à la canalisation qui alimente le décanteur sous pression en suspension, ou encore, de préférence, au système d'évacuation des boues rouges situé en sous-verse dudit décanteur sous pression. Mais il est possible également, en particulier lorsque la chaîne Bayer comporte des décanteurs classiques sous pression atmosphérique, de relier ladite tubulure d'évacuation des boues issues du gâteau de filtration à un puits d'évacuation, ledit puits pouvant lui-même:

- soit être séparé du dispositif de filtration, de temps en temps, à des moments choisis en fonction du remplissage du puits: on ferme une vanne placée sur la tubulure d'évacuation, de façon à mettre le puits temporairement à la pression atmosphérique puis à le vider de son contenu par gravité ou à l'aide d'un extracteur;
- soit être en communication avec un dispositif d'extraction, typiquement un extracteur sous la forme d'une enceinte comprenant un alésage dans lequel tourne, par intermittence ou en continu, une vis sans fin ou un tambour à ailettes, l'extrémité du filet ou des ailettes étant en contact étanche avec la paroi dudit alésage, ledit extracteur ayant une zone d'entrée communiquant avec ledit puits et une zone de sortie communiquant avec l'extérieur, l'étanchéité étant telle que, tant que l'enceinte de l'extracteur est remplie de boue, il n'y a pas de communication directe avec la pression atmosphérique de sorte qu'une pression suffisante, typiquement supérieure à 2 bars, peut être maintenue en permanence au sein du puits. Bien évidemment, une vanne de sécurité peut être également placée sur la tubulure d'évacuation de façon à protéger le dispositif de filtration de tout risque de dépressurisation dans le puits.

Ainsi, dans le procédé selon l'invention, on peut toujours réaliser la filtration de sécurité avec plusieurs dispositifs de filtration fonctionnant en parallèle, de sorte que l'un d'entre eux peut facilement être mis hors du circuit Bayer lors de son débâtissage mais ledit débâtissage doit se faire à une pression supérieure à la pression atmosphérique, typiquement supérieure à 2 bars, de préférence 3 bars.

Bien évidemment, la première zone comme la seconde zone sont conçues comme des enceintes devant travailler constamment sous pression. La liqueur d'aluminate doit rester, en sortie de filtration, soumise à une pression toujours supérieure à 2 bars, même lors du détachement et de l'évacuation du gâteau de filtration, opérations qui sont réalisées dans la première zone. La première zone est connectée à deux canalisations, une canalisation d'entrée de la liqueur d'aluminate sous pression et une tubulure d'évacuation du gâteau de filtration. La deuxième zone est connectée à une canalisation de sortie de la liqueur d'aluminate sous pression qui est dirigée en aval vers un dispositif consacré à l'étape de détente, de refroidissement et de dilution, préalable à la décomposition.

Dans une modalité préférée de l'invention, en amont de la filtration de sécurité, la liqueur d'aluminate est séparée des boues rouges par décantation sous pression. Pour cela, on utilise un dispositif de décantation sous pression (décanteur pressurisé) comprenant:

- un récipient ayant une paroi cylindrique allongée, une extrémité supérieure fermée et une partie inférieure conique destinée à accueillir les particules solides;
- un agitateur monté pour tourner le long d'une surface intérieure de la partie inférieure;
- un dispositif de décharge monté sous la partie inférieure, comprenant au moins une ouverture et une pompe à sous-verse pour évacuer les solides décantés sans perte de pression dans l'appareil;
- au moins un moyen de détection qui permet de détecter le niveau des solides atteint dans l'appareil sans perturber substantiellement le dépôt des solides, et
- une tubulure d'alimentation permettant de recevoir le flux entrant d'une suspension pressurisée, la dite tubulure d'alimentation présentant une ouverture au-dessus du niveau des solides décantés dans l'appareil.

Avantageusement, ladite suspension est décantée dans un décanteur pressurisé, tel que celui décrit ci-dessus, en étant maintenue à une température supérieure à 120°C, de préférence supérieure à 130°C, typiquement à une température comprise entre 140°C et 170°C, de préférence voisine de 160°C, et la surverse dudit décanteur pressurisé est conduite, avec ou sans refroidissement, vers ledit dispositif de filtration de sécurité. Comme indiqué précédemment, le dispositif d'évacuation des boues issues du gâteau de filtration comprend une tubulure d'évacuation qui peut être reliée à la tubulure d'alimentation qui permet de recevoir le flux entrant d'une suspension pressurisée dans ledit décanteur pressurisé, ou encore, de préférence, dans ou au voisinage de la sous-verse dudit décanteur pressurisé, les solides décantés étant évacués par ledit dispositif de décharge monté sous la partie inférieure du décanteur pressurisé. Bien évidemment, il est avantageux de viser un point de raccordement de la tubulure d'évacuation du gâteau de filtration sur le circuit d'évacuation des boues du décanteur pressurisé qui corresponde à une pression légèrement inférieure à celle existant dans la première zone du dispositif de la filtration de sécurité.

Les moyens prévus pour évacuer la liqueur issue du filtre après filtration à travers le média de filtration peuvent être de plusieurs natures. Le passage de la liqueur d'aluminate à travers le media de filtration est continu mais il peut être arrêté temporairement lors des cycles de décollement du gâteau. Une fois détachés, les débris peuvent être évacués du dispositif de filtration et extraits du circuit par intermittence ou en continu. Toutefois, que l'extraction soit effectuée de façon continue ou discontinue, la liqueur filtrée à travers le média de filtration, qui se présente sous la forme d'une liqueur contenant une quantité très faible de particules solides, est, avant d'être évacuée et portée à la pression atmosphérique, évacuée du dispositif de filtration par entraînement dans une tubulure d'évacuation dont la première extrémité est connectée à ladite première zone et dont l'autre extrémité est connectée à un dispositif d'évacuation. Avantageusement, ladite tubulure d'évacuation est munie d'une vanne qui permet d'isoler le dispositif de filtration du dispositif d'évacuation de la liqueur filtrée. Au même titre que le gâteau, cette liqueur filtrée doit être extraite en maintenant une pression supérieure à la pression atmosphérique, typiquement supérieure à 2 bars, de préférence 3 bars.

Le dispositif d'évacuation de la liqueur issue de la filtration peut se présenter sous plusieurs formes, en fonction des dispositifs existant sur le circuit Bayer considéré. Par exemple, la liqueur extraite sous pression peut être refroidie à une température inférieure à la température d'ébullition à pression atmosphérique, typiquement une température inférieure à 100°C, de préférence inférieure à 80°C, par exemple au moyen d'un échangeur de chaleur liquide / liquide, la pression étant maintenue au cours de ce refroidissement. La liqueur est ensuite détendue pour ramener sa pression à la pression atmosphérique à l'aide par exemple d'une vanne de régulation ou d'un orifice ménagé dans la paroi de la canalisation dans laquelle circule ladite liqueur d'aluminate.

Egalement, il pourra être prévu de relier ladite tubulure d'évacuation de la liqueur issue de la filtration à un puits d'évacuation, ledit puits pouvant lui-même:

- soit être séparé du dispositif de filtration, de temps en temps, à des moments choisis en fonction du remplissage du puits: on ferme une vanne placée sur la tubulure d'évacuation, de façon à mettre le puits temporairement à la pression atmosphérique puis à le vider de son contenu par gravité ou à l'aide d'un extracteur;
- soit être en communication avec un dispositif d'extraction fonctionnant par intermittence ou en continu, typiquement un extracteur sous la forme d'une enceinte comprenant un alésage dans lequel tourne une vis sans fin ou un tambour à ailettes, l'extrémité du filet ou des ailettes étant en contact étanche avec la paroi dudit alésage, ledit extracteur ayant une zone d'entrée communiquant avec ledit puits et une zone de sortie communiquant avec l'extérieur, l'étanchéité étant telle que, tant que l'enceinte de l'extracteur est remplie de liqueur, il n'y a pas de communication directe avec la pression atmosphérique de sorte qu'une pression suffisante, typiquement supérieure à 2 bars, peut être maintenue en permanence au sein du puits. Bien évidemment, une vanne de sécurité peut être également placée sur la tubulure d'évacuation de façon à protéger le dispositif de filtration de tout risque de dépressurisation dans le puits.

## EXEMPLE DE REALISATION (FIGURE)

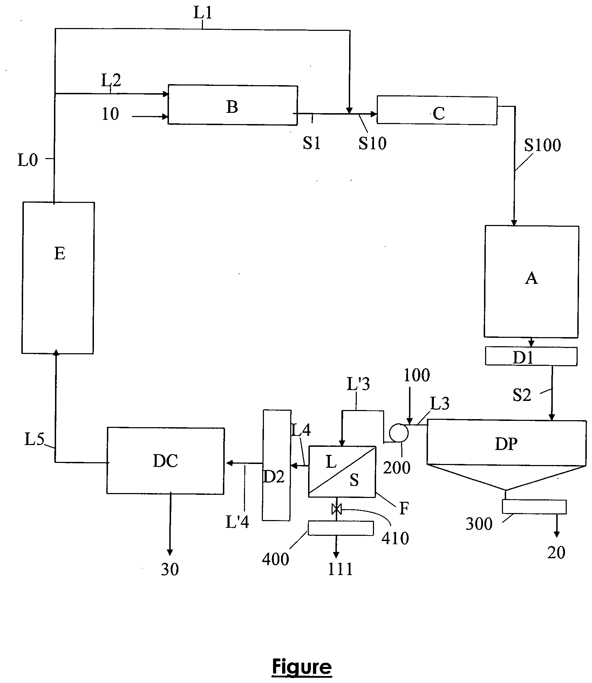

La figure illustre schématiquement un cycle Bayer amélioré selon l'invention, dans lequel on broie la bauxite **10** par broyage humide (B), ici en présence d'une aliquote **L2** de la liqueur d'attaque **L0.** Une aliquote **L1,** qui représente la plus grande partie de la liqueur d'attaque **L0,** typiquement plus de 80%, n'est pas dirigée vers le broyage humide de la bauxite. Elle est ajoutée à la suspension **S1** issue du broyage humide pour obtenir une suspension **S10** qui est préchauffée dans une chaîne de préchauffage (C). La suspension **S100** ainsi préchauffée est introduite dans la chaîne d'attaque (A). L'attaque se fait sous pression à 160°C. La chaîne d'attaque se présente sous la forme d'une série d'autoclaves dans lesquels la suspension doit circuler. En fin d'attaque, la suspension passe par des échangeurs de chaleur qui, par exemple, participent au préchauffage de la suspension avant attaque. En fin d'attaque, au cours de l'étape optionnelle (D1), la pression est réduite à une valeur p' supérieure à la pression atmosphérique, typiquement voisine de 4 atmosphères. La suspension **S2,** dont la température est descendue à 145°C, est dirigée vers un dispositif de séparation liquide/solide (DP), typiquement un décanteur sous pression dans lequel les résidus insolubles sont séparés de la liqueur par gravitation: les résidus insolubles sont évacués sous forme de boues rouges **20** en passant par un extracteur **300** tandis que la surverse **L3,** encore chargée de quelques particules - sa teneur en matières sèches est de l'ordre d'une centaine de mg/l est dirigée vers la filtration (F), dite "filtration rouge" ou "filtration de sécurité". Par le biais d'une pompe **200,** la surverse est dirigée vers la filtration de sécurité avec une pression voisine de 6-7 atmosphères. Le filtrat **L4** est une liqueur d'aluminate sursaturée dont la pression est ramenée à la pression atmosphérique au cours de l'étape (D2), où elle est d'abord refroidie à une température inférieure à 80°C au moyen d'un échangeur de chaleur liquide / liquide, la pression étant maintenue à une valeur proche de 6 bars, puis où elle est détendue pour ramener sa pression à la pression atmosphérique à l'aide d'une vanne de régulation (non représentée). La liqueur **L'4** détendue est dirigée vers la chaîne de décomposition (DC) où elle est refroidie pour faire précipiter le trihydrate d'alumine **30.**

En sortie de la chaîne de décomposition (DC), la liqueur appauvrie **L5** est concentrée par évaporation (E) pour être redirigée vers l'attaque (liqueur d'attaque **L0**).

De l'aluminate tricalcique hexahydraté est employé en tant qu'adjuvant de filtration **100** à la filtration de sécurité **F.** La liqueur sursaturée provient en effet de la surverse des décanteurs et contient encore une certaine quantité de particules solides. Celles-ci se révèlent en général très collantes et, pour ne pas boucher la trame des filtres, on ajoute un adjuvant de filtration qui modifie le comportement physicochimique de ces fines particules. On utilise en général de la chaux ou de l'aluminate tricalcique, en particulier l'aluminate tricalcique hexahydraté. Dans le cadre de cet exemple, on introduit, en amont de la pompe **200,** de l'aluminate tricalcique hexahydraté **100** à raison de 0,95 g CaO par litre de liqueur.

Au niveau de la filtration de sécurité **F,** la température de la liqueur d'aluminate est voisine de 140°C, de sorte que l'on peut filtrer une liqueur sursaturée **L'3** dont l'indice de saturation Rp est égal à 1,35. Sans le dispositif selon l'invention, la filtration de sécurité ne peut se faire qu'avec la mise sous pression atmosphérique de la liqueur d'aluminate en sortie du filtre, de sorte que la température de la liqueur, au niveau du filtre de sécurité, ne peut pas être supérieure à une valeur voisine de 105°C, correspondant à la température d'ébullition de la liqueur à la pression atmosphérique. A une telle température, il n'est pas possible de faire traverser le filtre de sécurité par une liqueur d'aluminate ayant un Rp supérieur à 1,25, sans risquer une forte précipitation d'hydrate d'alumine sur le media de filtration. Par contre, en maintenant après filtration la liqueur sous pression, il est possible de maintenir celle-ci à une température nettement supérieure à 105°C, une température telle qu'elle permet de filtrer une liqueur ayant un Rp élevé sans risque de précipitation intempestive sur le media de filtration. De fait, dans l'art antérieur, même si juste après attaque, la liqueur pouvait déjà atteindre un Rp élevé, voisin de 1,35, il fallait, pour limiter les risques de précipitation intempestive, diluer ladite liqueur avant qu'elle ne passe à la filtration de sécurité ("diluer" veut dire ici diminuer le Rp par augmentation de la teneur en soude caustique, par exemple en ajoutant de la liqueur d'attaque ou une liqueur ayant un Rp plus faible).

Le gâteau de filtration **111** ainsi formé est détaché du filtre et évacué, sous forme d'une boue dont la teneur en matières sèches en voisine de 500 g/l, vers un puits d'évacuation **400**. Une vanne **410** permet de séparer le puits **400** du dispositif de filtration (F). Lorsque le puits est plein, on ferme la vanne **410** placée sur la tubulure d'évacuation, de façon à mettre le puits temporairement à la pression atmosphérique puis à le vider de son contenu par gravité.

## Revendications

1.  Procédé de fabrication de trihydrate d'alumine par attaque alcaline de bauxite, suivant les étapes générales du procédé Bayer:

    a) s'approvisionner en minerai de bauxite (10);
    b) attaquer (A) ledit minerai à chaud au moyen d'une liqueur d'aluminate de sodium à concentration appropriée (liqueur d'attaque), en provoquant ainsi la solubilisation de l'alumine dans ladite liqueur d'aluminate de sodium et l'obtention d'une suspension (S2) comprenant ladite liqueur enrichie en alumine dissoute et des particules du minerai qui n'ont pas été dissoutes au cours de l'attaque ("boues rouges");
    c) séparer la liqueur d'aluminate de sodium des dites boues rouges, typiquement par décantation;
    d) mettre ladite liqueur d'aluminate de sodium dans un état en fort déséquilibre de sursaturation (liqueur sursaturée), typiquement par refroidissement et dilution;
    e) introduire des particules de trihydrate d'alumine dans ladite liqueur sursaturée dans le but de provoquer la décomposition (DC), c'est-à-dire la précipitation de l'alumine sous forme de trihydrate d'alumine;
    f) après décomposition, concentrer la liqueur d'aluminate de sodium, appauvrie en alumine du fait de la précipitation ("liqueur décomposée") typiquement par évaporation (E) et apport éventuel en hydroxyde de sodium et
    g) recycler ladite liqueur vers l'étape b) d'attaque de la bauxite,

    ledit procédé au cours duquel, entre l'étape c) et l'étape d), la liqueur d'aluminate (L'3) subit une filtration (F), dite filtration de sécurité, de sorte qu'en sortie de filtration elle contienne moins de 10 mg/l de particules insolubles (teneur en matière sèche), ledit procédé étant **caractérisé en ce que**, au cours de ladite étape de filtration de sécurité,
    on utilise un dispositif de filtration comprenant une zone dans laquelle la liqueur est soumise, après passage par ledit média de filtration, à une pression supérieure à 2 bars, de préférence supérieure à 3 bars.

2.  Procédé selon la revendication 1 **caractérisé en ce que** ledit dispositif de filtration comprend également une zone dans laquelle la liqueur est soumise, avant passage par le média de filtration, à une pression supérieure à 5 bars, de préférence supérieure à 6, typiquement voisine de 7 bars.

3.  Procédé selon la revendication 1 ou 2 **caractérisé en ce que**, au cours de ladite filtration de sécurité, la liqueur d'aluminate se trouve à une température supérieure à 120°C, de préférence supérieure à 130°C, de préférence encore supérieure à 140°C.

4.  Procédé selon l'une quelconque des revendications 1 à 3 dans lequel, au cours de ladite filtration de sécurité, on injecte dans la liqueur d'aluminate (L3), en amont dudit dispositif de filtration, un adjuvant de filtration (100).

5.  Procédé selon l'une quelconque des revendications 1 à 4 dans lequel, au cours de ladite filtration de sécurité, on utilise un dispositif de filtration comprenant une zone dans laquelle la liqueur est soumise, avant passage par le média de filtration, à une pression comprise entre 5 et 9 bars, de préférence entre 6 et 8 bars et une zone dans laquelle la liqueur est soumise, après passage par ledit média de filtration, à une pression comprise entre 2 et 6 bars, de préférence entre 3 et 5 bars.

6. Procédé selon l'une quelconque des revendications 1 à 5 dans lequel, au cours de ladite filtration de sécurité, on utilise au moins un dispositif comprenant une cuve, un média de filtration et au moins deux zones séparées par ledit média de filtration, la liqueur étant introduite, avant filtration, dans la première zone et passant, après filtration, dans la deuxième zone, ledit dispositif comprenant également des moyens prévus pour détacher, dans la première zone, le gâteau de filtration du média de filtration alors que la liqueur d'aluminate de sodium reste à une pression supérieure à 2 bars, de préférence au moins supérieure à 3 bars.

7. Procédé selon la revendication 6 dans lequel lesdits moyens prévus pour détacher le gâteau de filtration du média de filtration comprennent un racleur qui se déplace, par translation ou par rotation, parallèlement à la surface du média de filtration, pouvant fonctionner de façon discontinue, en fonction de l'épaisseur atteinte par le gâteau, ou pouvant fonctionner de façon continue, en association avec un système d'aspiration continue.

8. Procédé selon la revendication 6 dans lequel lesdits moyens prévus pour détacher le gâteau de filtration du média de filtration comportent un système comprenant plusieurs vannes disposées sur les tubulures d'entrée et d'évacuation de la liqueur qui permettent l'isolement du dispositif de filtration par rapport au circuit Bayer et par rapport à l'extérieur soumis à la pression atmosphérique, la liqueur d'aluminate piégée dans le circuit isolé étant alors mise en circulation de façon à effectuer un nettoyage du média de filtration.

9. Procédé selon l'une quelconque des revendications 8-6 à 8, dans lequel les fragments de gâteau détachés du média de filtration sont extraits du dispositif de filtration et entraînés dans une tubulure d'évacuation dont la première extrémité est connectée à ladite première zone et dont l'autre extrémité est connectée à un dispositif (400) d'évacuation des boues (111) issues dudit gâteau.

10. Procédé selon la revendication 9 dans lequel ladite tubulure d'évacuation est munie d'une vanne (10) qui permet d'isoler ledit dispositif de filtration du dispositif (400) d'évacuation des boues issues du gâteau de filtration.

11. Procédé selon l'une quelconque des revendications 1 à 10 dans lequel, au cours de l'étape c), ladite liqueur d'aluminate est séparée des boues rouges par décantation sous pression (DP).

12. Procédé selon la revendication 11 dans lequel la suspension est décantée dans un dispositif de décantation sous pression à une température supérieure à 120°C, de préférence supérieure à 130°C, typiquement à une température comprise entre 140°C et 170°C, de préférence voisine de 160°C, et dans lequel la surverse dudit décanteur pressurisé est conduite vers ledit dispositif de filtration de sécurité.

13. Procédé selon l'une quelconque des revendications 6 à 12 dans lequel la liqueur filtrée est, avant d'être évacuée et portée à la pression atmosphérique, extraite du dispositif de filtration par entraînement dans une tubulure d'évacuation dont la première extrémité est connectée à ladite première zone et dont l'autre extrémité est connectée à un dispositif d'évacuation.

14. Procédé selon la revendication 13 dans lequel ladite tubulure d'évacuation est munie d'une vanne qui permet d'isoler le dispositif de filtration du dispositif d'évacuation de la liqueur filtrée.

15. Procédé selon la revendication 13 ou 14 dans lequel on refroidit, tout en la maintenant sous pression, la liqueur d'aluminate sortant du dispositif de filtration à une température inférieure à sa température d'ébullition à la pression atmosphérique, de préférence à une température inférieure à 80°C, typiquement au moyen d'un échangeur de chaleur liquide / liquide, puis on détend ladite liqueur d'aluminate jusqu'à ce que sa pression atteigne la pression atmosphérique, à l'aide par exemple d'une vanne de régulation ou d'un orifice ménagé dans la paroi de la canalisation dans laquelle circule ladite liqueur d'aluminate.

**Patentansprüche**

1. Verfahren zur Herstellung von Alummiumtrihydrat durch alkalischen Aufschluss von Bauxit entsprechend den allgemeinen Schritten des Bayer-Verfahrens:

a) Beschaffung von Bauxiterz (10);

b) Aufschließen (A) des Erzes unter Wärmeeinfluss mittels einer Natriumaluminatlauge in geeigneter Konzentration (Frischlauge), um somit die Solubilisierung des Aluminiumoxids in der Natriumaluminatlauge zu bewirken und eine Suspension (S2) zu erhalten, die aus der Lauge mit gelöstem Alummiumoxid und den Erzpartikeln, die sich während des Aufschlusses nicht aufgelöst haben ("Rotschlamm"), besteht;

c) Trennung von Natriumaluminatlauge und Rotschlamm, normalerweise durch Absetzung;

d) Versetzen der Natriumaluminatlauge in einen extrem unausgewogenen Zustand der Übersättigung (übersättigte Lauge), normalerweise durch Kühlung und Verdünnung;

e) Zugabe von Aluminiumtrihydratpartikeln zu der übersättigten Lauge, um eine Zersetzung (DC) zu bewirken, das heißt, ein Ausfällen von Aluminiumoxid in Form von Aluminiumtrihydrat;

f) Nach der Zersetzung, Eindickung der Natriumaluminatlauge, die aufgrund der Ausfällung ("zersetzte Lauge") arm an Alummiumoxid ist, was normalerweise durch Verdampfung (E) und ggf. Einbringen von Natriumhydroxid geschieht, und

g) Rückführung der Lauge zu Schritt b) Aufschließen des Bauxits,

Verfahren, bei dem die Aluminatlauge (L'3) zwischen Schritt c) und Schritt d) einer Filterung (F) unterzogen wird, der so genannten Sicherheitsfilterung, sodass die Lauge nach Abschluss der Filterung weniger als 10 mg/l an unlöslichen Teilchen (Trockenmassegehalt) enthält,

wobei das Verfahren **dadurch gekennzeichnet ist, dass** bei dem Schritt der Sicherheitsfilterung eine Filtervorrichtung verwendet wird, die aus einer Zone besteht, in der die Lauge nach Durchgang durch das Filtermedium mit einem Druck von mehr als 2 Bar, vorzugsweise von mehr als 3 Bar beaufschlagt wird.

2. Verfahren nach Anspruch 1, **dadurch gekennzeichnet, dass** die Filtervorrichtung außerdem eine Zone umfasst, in der die Lauge vor Durchgang durch das Filtermedium mit einem Druck von mehr als 5 Bar, vorzugsweise mehr als 6 Bar, normalerweise nahe an 7 Bar beaufschlagt wird.

3. Verfahren nach Anspruch 1 oder 2, **dadurch gekennzeichnet, dass** die Aluminatlauge bei der Sicherheitsfilterung eine Temperatur von mehr als 120 °C, vorzugsweise von mehr als 130 °C, stärker bevorzugt von mehr als 140 °C aufweist.

4. Verfahren nach einem der Ansprüche 1 bis 3, bei dem der Aluminatlauge (L3) während der Sicherheitsfilterung vor der Filtervorrichtung ein Filterhilfsmittel (100) zugesetzt wird.

5. Verfahren nach einem der Ansprüche 1 bis 4, bei dem während der Sicherheitsfilterung eine Filtervorrichtung verwendet wird, die aus einer Zone besteht, in der die Lauge vor Durchgang durch das Filtermedium einem Druck zwischen 5 bis 9 Bar, vorzugsweise zwischen 6 und 8 Bar ausgesetzt wird, und einer weiteren Zone, in der die Lauge nach Durchgang durch das Filtermedium einem Druck zwischen 2 und 6 Bar, vorzugsweise zwischen 3 und 5 Bar ausgesetzt wird.

6. Verfahren nach einem der Ansprüche 1 bis 5, bei dem während der Sicherheitsfilterung mindestens eine Vorrichtung, bestehend aus einer Wanne, einem Filtermedium und mindestens zwei Zonen, die durch das Filtermedium getrennt sind, verwendet wird und wobei vor der Filterung die in die erste Zone eingeleitete Lauge diese Zone passiert und nach der Filterung in die zweite Zone gelangt, wobei in dieser Vorrichtung außerdem Einrichtungen vorgesehen sind, um in der ersten Zone den Filterkuchen vom Filtermedium zu trennen , während die Natriumaluminatlauge weiterhin einem Druck von mehr als 2 Bar, vorzugsweise mindestens über 3 Bar ausgesetzt bleibt.

7. Verfahren nach Anspruch 6, bei dem die Einrichtungen zur Trennung von Filterkuchen und Filtermedium einen Abstreifer aufweisen, der sich durch Translation oder Rotation parallel zur Oberfläche des Filtermediums diskontinuierlich, abhängig von der erreichten Dicke des Filterkuchens, oder kontinuierlich zusammen mit einem System für eine fortwährende Absaugung bewegt.

8. Verfahren nach Anspruch 6, bei dem-die Einrichtungen zur Trennung von Filterkuchen und Filtermedium ein System mit mehreren Ventilen umfassen, die auf den Ein- und Austrittsrohrleitungen für die Lauge angebracht sind und eine Absperrung der Filtervorrichtung gegenüber dem Bayer-Leitungssystem und gegenüber der Umgebung, in der Umgebungsluftdruck herrscht, ermöglichen, wobei die im abgesperrten Leitungssystem eingeschlossene Aluminatlauge dann in Bewegung gesetzt wird, um eine Reinigung des Filtermediums zu bewirken.

9. Verfahren nach einem der Ansprüche 6 bis 8, bei dem vom Filtermedium getrennte Teile des Filterkuchens aus der Filtervorrichtung ausgetragen und in eine Ablaufleitung geleitet werden, deren erstes Ende mit der ersten Zone und deren zweites Ende mit einem Ablauf (400) für Schlämme (111), die aus dem Filterkuchen stammen, verbunden ist.

10. Verfahren nach Anspruch 9, bei dem der Ablauf mit einem Ventil (410) versehen ist, mit dem die Filtervorrichtung vom Ablauf (400) für Schlämme, die aus dem Filterkuchen stammen, getrennt werden kann.

11. Verfahren nach einem der Ansprüche 1 bis 10, bei dem die Aluminatlauge während des Schritts c) vom Rotschlamm durch Druckabsetzung (DP) getrennt wird.

12. Verfahren nach Anspruch 11, bei dem die Suspension in einer Druckabsetzvorrichtung bei einer Temperatur von mehr als 120 °C, vorzugsweise von mehr als 130 °C, normalerweise bei einer Temperatur zwischen 140° und 170 °C, vorzugsweise in der Nähe von 160 °C geklärt wird und bei dem der Überlauf der Druckabsetzvorrichtung in die Sicherheitsfiltervorrichtung eingeleitet wird.

13. Verfahren nach einem der Ansprüche 6 bis 12, bei dem die gefilterte Lauge vor dem Ablauf und vor der Beaufschlagung mit dem Umgebungsluftdruck aus der Filtervorrichtung durch Einleitung in eine Ablaufleitung, deren erstes Ende an die erste Zone und deren anderes Ende an eine Ablaufvorrichtung angeschlossen ist, abgezogen wird.

14. Verfahren nach Anspruch 13, bei dem die Ablaufleitung mit einem Ventil versehen ist, mit dem die Filtervorrichtung vom Ablauf für die geklärte Lauge getrennt werden kann.

15. Verfahren nach Anspruch 13 oder 14, bei dem die Aluminatlauge, die unter Druck steht und die aus der Filtervorrichtung austritt, auf eine Temperatur unter ihre Siedetemperatur bei Umgebungsluftdruck, vorzugsweise auf eine Temperatur von unter 80 °C, normalerweise mittels eines Flüssigkeit-Flüssigkeit-Wärmetauschers gekühlt wird. Anschließend wird die Aluminatlauge entspannt, bis ihr Druck dem Umgebungsluftdruck entspricht, was beispielsweise über ein Regelventil oder eine Bohrung in der Wand der Rohrleitung, in der die Aluminatlauge zirkuliert, geschieht.

## Claims

1. A manufacturing process for alumina trihydrate by alkaline attack of bauxite, following the general stages of the Bayer process:

   a) procuring bauxite ore (10);
   b) attacking (A) said hot ore by means of a sodium aluminate liquor at a suitable concentration (attack liquor), thereby causing the alumina to become soluble in said sodium aluminate liquor and obtaining a suspension (S2) including said liquor enriched with dissolved alumina and particles of ore which were not dissolved during the attack ("red mud");
   c) separating the sodium aluminate liquor from said red mud, typically by settling;
   d) placing said sodium aluminate liquor in a highly unbalanced state of supersaturation (supersaturated liquor), typically by cooling and dilution;
   e) introducing alumina trihydrate particles into said supersaturated liquor with a view to causing decomposition (DC) of the supersaturated liquor, i.e. causing alumina to precipitate in the form of alumina trihydrate.
   f) after decomposition, concentrating the sodium aluminate liquor, depleted in alumina as a result of precipitation ("decomposed liquor") typically by evaporation (E) and possible addition of sodium hydroxide, and
   g) recycling said liquor to the bauxite attack stage b),

   said process during which, between stage c) and stage d), the aluminate liquor (L'3) undergoes filtration (F), known as safety filtration, so that on leaving the filtration stage it contains less than 10 mg/l of insoluble particles (dry matter content),
   said process being **characterized in that**, during said safety filtration stage, a filtering device is used including a zone in which the liquor is subjected, after going through said filtration medium, to a pressure greater than 2 bar, and preferably greater than 3 bar.

2. A process according to claim 1 **characterized in that** said filtering device also includes a zone in which the liquor is subjected, before going through the filtration medium, to a pressure greater than 5 bar, preferably greater than 6, and typically close to 7 bar.

3. A process according to claim 1 or 2 **characterized in that**, during said safety filtration, the aluminate liquor is at a. temperature greater than 120 °C, preferably greater than 130°C, and preferably still greater than 140°C.

4. A process according to any of claims 1 to 3 in which, during said safety filtration, a filtration additive (100) is injected into the aluminate liquor (L3), upstream of said filtering device.

5. A process according to any of claims 1 to 4 in which, during said safety filtration, a filtering device is used that includes a zone in which the liquor is subjected, before going through the filtration medium, to a pressure ranging between 5 and 9 bar, and preferably between 6 and 8 bar, and a zone in which the liquor is subjected, after going through said filtration medium, to a pressure ranging between 2 and 6 bar, and preferably between 3 and 5 bar.

6. A process according to any of claims 1 to 5 in which, during said safety filtration, at least one device is advantageously used comprising a tank, a filtration medium and at least two zones separated by said filtration medium, the liquor being introduced, before filtration, into the first zone and passing, after filtration, into the second zone, said device also including means designed to peel off the filtration cake from the filtration medium in the first zone, while the sodium aluminate liquor remains at a pressure greater than 2 bar and preferably at least greater than 3 bars.

7. A process according to claim 6 in which said means designed to peel off the filtration cake from the filtration medium include a scraper which moves, by translation or rotation, parallel to the surface of the filtration medium, and able to function discontinuously, depending on the thickness reached by the cake, or able to function continuously, in conjunction with a continuous suction system.

8. A process according to claim 6 in which said means designed to peel off the filtration cake from the filtration medium comprise a system including several valves laid out on the liquor inlet and outlet pipes which allow the filtering device to be isolated from the Bayer circuit and from the outside subjected to atmospheric pressure, the aluminate liquor trapped in the isolated circuit being then made to circulate in order to clean the filtration medium.

9. A process according to any of claims 6 to 8, in which the fragments of cake removed from the filtration medium are extracted from the filtering device and entrained into a removal pipe, one end of which is connected to said first zone and the other end is connected to a device (400) for removing the mud (111) coming from said cake.

10. A process according to claim 9 in which said removal pipe is provided with a valve (410) which makes it possible to isolate the filtering device (400) from the removal device for the mud coming from the filtration cake.

11. A process according to any of claims 1 to 10 in which, during stage c), said aluminate liquor is separated from the red mud by settling under pressure (DP).

12. A process according to claim 11 in which the suspension is settled in a settling device under pressure at a temperature greater than 120°C, preferably greater than 130°C, typically at a temperature ranging between 140°C and 170°C, preferably close to 160°C, and in which the overflow from said pressurized settling tank is sent to said safety filtering device.

13. A process according to any of claims 6 to 12 in which the filtered liquor, before being removed and brought to atmospheric pressure, is extracted from the filtering device by being entrained in a removal pipe, the first end of which is connected to said first zone and the other end is connected to a removal device.

14. A process according to claim 13 in which said removal pipe is provided with a valve which makes it possible to isolate the filtering device from the removal device for the filtered liquor.

15. A process according to claim 13 or 14 in which aluminate liquor leaving the filtering device, while being kept under pressure, is cooled to a temperature lower than its boiling point at atmospheric pressure, preferably to a temperature lower than 80°C, typically by means of a liquid / liquid heat exchanger, then the pressure of said aluminate liquor is reduced until it reaches atmospheric pressure, using, for example, a regulation valve or an opening made in the wall of the pipe in which said aluminate liquor circulates.

**Figure**

**EP 2 321 224 B1**

## RÉFÉRENCES CITÉES DANS LA DESCRIPTION

**Documents brevets cités dans la description**

- US 5407561 A
- GB 179355 A
- EP 0226478 A
- FR 286078
- EP 0382202 A